# EUROPÄISCHE PATENTSCHRIFT

(11) **EP 0 931 296 B1**
(45) Veröffentlichungstag und Bekanntmachung des Hinweises auf die Patenterteilung: **22.01.2003**
(21) Anmeldenummer: 97911217.4
(22) Anmeldetag: 13.10.1997
(51) Int. Cl.: G06K 19/077

(54) **VERFAHREN ZUM HERSTELLEN EINER KONTAKTLOSEN CHIPKARTE**
METHOD FOR THE MANUFACTURE OF A CONTACTLESS SMART CARD
PROCEDE DE FABRICATION D'UNE CARTE A PUCE SANS CONTACT

(30) Priorität: 14.10.1996 DE 19642378
(43) Veröffentlichungstag der Anmeldung: 28.07.1999
(73) Patentinhaber: Zakel, Elke, 14612 Falkensee (DE); Smart Pac GmbH Technology Services, 14641 Nauen (DE)
(72) Erfinder: AZDASHT, Ghassem, D-14052 Berlin (DE); LANGE, Martin, D-10437 Berlin (DE)
(74) Vertreter: Schoppe, Fritz, Dipl.-Ing.
(86) Internationale Anmeldenummer: EP9705624
(87) Internationale Veröffentlichungsnummer: WO98016901

(56) Entgegenhaltungen:
- EP-A- 0 671 705
- EP-A- 0 682 321
- EP-A- 0 692 770
- DE-A- 4 435 802

## Beschreibung

Die vorliegende Erfindung bezieht sich auf ein Verfahren zum Herstellen einer kontaktlosen Chipkarte, welche mittels elektromagnetischer Wellen mit Energie versorgt wird und kommuniziert.

In jüngster Zeit hat die Verbreitung von kontaktlosen Chipkarten beispielsweise zur Verwendung als Autoschlüssel oder als Türschlüssel stark zugenommen. Derartige kontaktlose Chipkarten ermöglichen ein schnelles und berührungsloses Öffnen von Türen oder auch ein schnelles Identifizieren einer bestimmten Person.

Kontaktlose Chipkarten umfassen im allgemeinen auf einem Chipkartensubstrat einen Mikrochip und eine Antennenstruktur. Im allgemeinen ist keine in der Chipkarte vorhandene interne Stromversorgung vorgesehen, um ein Verfallen der Chipkarte bei aufgebrauchter Batterie zu vermeiden. Die Chipkarte wird von einer Basisstation aus mit elektrischer Leistung in Form von elektromagnetischen Wellen versorgt, wobei dies ein Grund ist, weshalb bei Chipkarten im allgemeinen Induktions- oder auch Spulenantennen verwendet werden. Schleifenantennen erlauben im Gegensatz zu Dipolantennen eine effektivere Einkopplung von elektromagnetischer Leistung in die auf dem Chip befindliche Antenne. Diese in die Antenne eingekoppelte Leistung wird gleichgerichtet, um den ebenfalls auf der Chipkarte vorhandenen Mikrochip mit elektrischer Leistung zu versorgen, damit derselbe beispielsweise an ein Autotürschloß oder eine Identifikationseinrichtung einen speziellen Code senden kann, um eine durch den Code codierte Handlung zu erreichen.

Die Funktonsweisen des Einkoppelns von elektrischer Leistung in die Chipkarte und des Kommunizierens des Mikrochips mit einer festen oder mobilen Station sind für Fachleute bekannte und beispielsweise in dem U.S. Patent Nr. 5,473,323 beschrieben. Dieses Patent beschreibt ein Verfahren zur kontaktiosen Daten- und Energieübertragung zwischen einer unbeweglichen Mikrostation mit einem Spulenpaar und mit einer Einrichtung zum Bereitstellen eines oszillierenden Taktsignales und einer mobilen Mikroeinheit mit einer oder zwei Spulen.

Ferner beschreibt das U.S. Patent Nr. 5,449,894 ein Verfahren zum Betreiben einer kontaktlosen und batterielosen Chipkarte, welche über ein Energie-übertragendes Wechselfeld von einer Schreiben/Lesen-Einheit mit Energie versorgt wird. Die bidirektionale Datenübertragung wird durch Modulation des Energie-übertragenden Wechselfeldes mittels einer Antennenspule erreicht, wobei das Energie-übertragende Feld einen Spulenstrom in der Spule und eine Spulenspannung an der Spule erzeugt, wobei eine Eingangsschaltung mit Enden der Spule zum Erzeugen einer Versorgungsspannung aus dem Strom in der Spule und ein Spannungsdetektor mit den Enden der Spule gekoppelt sind, um bestimmte Eigenschaften des Energie-übertragenden Wechselfeldes zu erfassen.

Das U.S. Patent Nr. 5,440,302 beschreibt eine Vorrichtung zur kontaktlosen Daten- und Energieübertragung, welche einen festen Teil und einen beweglichen Teil aufweist.

Zum Herstellen von kontaktlosen Chipkarten wird im allgemeinen ein isolierendes Chipkartensubstrat verwendet, auf dem ein Mikrochip, der die gewünschten Funktionen ausführen kann, plaziert ist. Auf einer von dem Mikrochip entfernten Stelle des Chipkartensubstrats oder auf einem eigenen Substrat werden ferner die benötigten Antennenstrukturen, die im wesentlichen als Spulen ausgeführt sind beispielsweise mittels bekannter photolithographischer Techniken aufgebracht. Um die Spulenstrukturen mit dem Mikrochip zu verbinden, können bei bekannten kontaktlosen Chipkarten Bonddrähte verwendet werden. Die Bonddrähte erstrecken sich von einer Anschlußstelle einer Spule zu einer Anschlußfläche auf dem Mikrochip, wobei dieselben auf bekannte Art und Weise mittels einer Bondvorrichtung erzeugt werden, um die Spulenstruktur und den Mikrochip elektrisch leitfähig miteinander zu verbinden.

Nachteilig an der Herstellungsweise bekannter kontaktloser Chipkarten ist die Tatsache, daß teuere Bondvorrichtungen benötigt werden, um den Mikrochip mit der Antennenstruktur zu verbinden. Bei einem Massenprodukt, wie es eine kontaktlose Chipkarte ohne Zweifel ist, entscheiden jedoch bereits kleine Kostenvorteile des Produkts darüber, ob sich dasselbe gegenüber einem teureren Konkurrenzprodukt durchsetzen kann.

Die nachveröffentlichte EP 0756244 A2 offenbart eine Schaltungseinheit und ein Verfahren zur Herstellung einer Schaitungseinheit. Zur Einbettung eines integrierten Schaltkreises in ein Trägersubstrat kann entweder eine entsprechende Aussparung vorgesehen werden, oder der integrierte Schaltkreis kann unter Anwendung von Hitze und Druck in das Trägersubstrat eingepreßt werden.

Die DE 44 16 697 A1 offenbart einen Datenträger mit integriertem Schaltkreis. Der integrierte Schaltkreis ist über Kontaktelemente mit wenigstens einer Spule verbunden, wobei der integrierte Schaltkreis und die Kontaktelemente ein Modul bilden und die Spule auf einem Kartenkörper angeordnet ist. Die Spule ist auf einer inneren Schicht des Kartenkörpers angeordnet, welche ebenfalls eine Öffnung zur Aufnahme des Moduls umfaßt. Das Modul, das mindestens einen integrierten Schaltkreis mit zwei Anschlüssen umfaßt, wird in eine vorher hergestellte Ausnehmung der inneren Schicht eingebracht.

Die DE 4431606 A1 offenbart ein Chipkartenmodul für eine kontaktlose Chipkarte und Verfahren zur Herstellung derselben. Dabei ist ein Halbleiterchip auf einem flexiblen, nicht leitenden Trägerchip angeordnet, wobei zwei Enden einer Lackdrahtspule elektrisch mit dem Halbleiterchip verbunden sind, um eine Direktverbindung zwischen dem Halbleiterchip und den Spulenenden zu erreichen. Der Chip wird auf den Trägerkörper gesetzt und dann kontaktiert.

Die DE 44 10 732 A1 offenbart ein Verfahren zur Herstellung einer Chipkarte sowie eine Chipkarte. Die Chipkarte umfaßt einen Chip und eine Spule, wobei der Chip und die Spule auf einem gemeinsamen Substrat angeordnet sind und die Ausbildung der Spule durch Verlegung eines Spulendrahts erfolgt. Der Chip wird durch Thermokompression, also Erweichen der Oberfläche des Substrats durch Erwärmung und Eindrücken des Chips, oder durch "Einreiben" mittels Ultraschalleinwirkung in die Oberfläche des Substrats eingebracht.

Ausgehend von diesem Stand der Technik liegt der vorliegenden Erfindung die Aufgabe zugrunde, eine preiswertes und zuverlässiges Verfahren zum Herstellen einer kontaktlosen Chipkarte zu schaffen.

Diese Aufgabe wird durch ein Verfahren zum Herstellen einer kontaktlosen Chipkarte gemäß Anspruch 1 gelöst.

Der vorliegenden Erfindung liegt die Erkenntnis zugrunde, daß auf das in einem eigenen Schritt durchzuführende Verbinden der Spulenstruktur mit dem Mikrochip verzichtet werden kann, wenn sowohl eine Spulenstruktur als auch ein Chip auf einem gemeinsamen isolierenden Chipkartensubstrat angeordnet werden. Durch Realisieren der Spulenstruktur mittels Aufbringen einer leitfähigen Paste, nachdem der Chip auf dem Chipkartensubstrat angeordnet worden ist, derart, daß sich die Spulenstruktur bis zu Anschlußstellen auf den Chip hin erstreckt, wird die separate Durchführung eines Bondverbindungsschrittes hinfällig, da die Spulenstruktur bereits mit dem Chip verbunden ist.

Ein bevorzugtes Ausführungsbeispiel der vorliegenden Erfindung wird nachfolgend bezugnehmend auf die beiliegenden Zeichnungen detailliert erläutert. Es zeigen:
- Fig. 1: eine Draufsicht auf eine kontaktlose Chipkarte die durch das Verfahren gemäß der vorliegenden Erfindung hergestellt ist; und
- Fig. 2A bis 2D: eine Sequenz von Schritten zum Herstellen der kontaktlosen chipkarte von Fig. 1

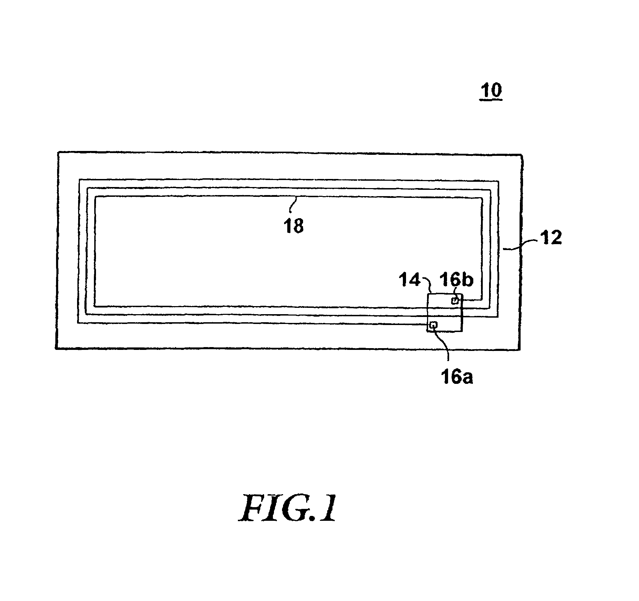

Fig. 1 zeigt eine schematische Draufsicht einer kontaktlosen Chipkarte 10, die durch das Verfahren gemäß der vorliegenden Erfindung hergestellt ist. Die kontaktlose Chipkarte 10 umfaßt ein isolierendes Chipkartensubstrat 12, in dem ein Chip 14 angeordnet ist, welcher zwei Anschlußflächen 16a und 16b aufweist. Mit den Anschlußflächen 16a bzw. 16b sind die Enden einer leitfähigen Spulenstruktur 18, welche bei dem in Fig. 1 gezeigten Ausführungsbeispiel 3 Windungen aufweist, verbunden. Die Oberfläche des Mikrochips 14 ist üblicherweise abgesehen von den Anschlußflächen 16a, 16b isolierend ausgeführt. Dadurch sind die Leiterabschnitte der Spulenstruktur 18, welche über dem Chip verlaufen, von demselben isoliert.

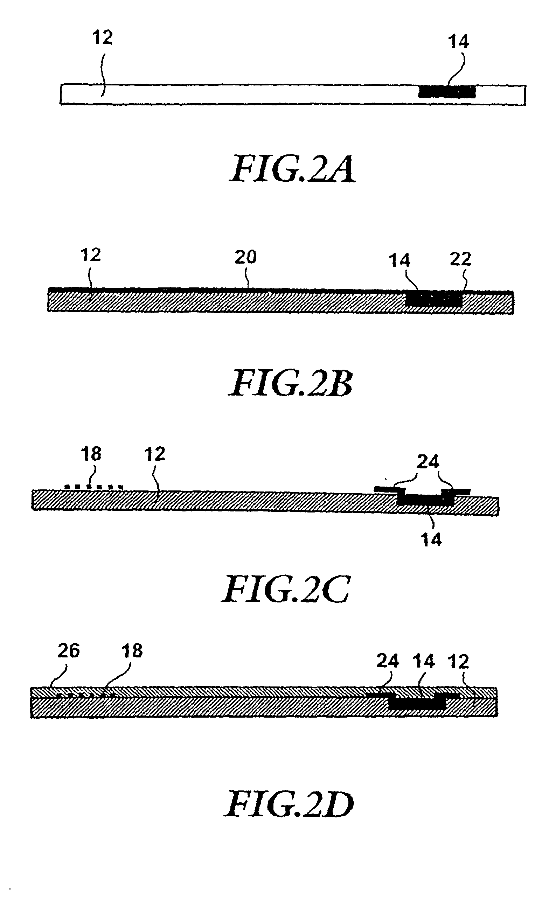

Die Fig. 2A bis 2D zeigen die kontaktlose Chipkarte 10 jeweils im Querschnitt in einer Sequenz von Herstellungsschritten für dieselbe. In einer Gießform mit einer Ausnehmung, die die Gestalt des Chipkartensubstrats definiert, wird der Chip 14 auf bekannte Art und Weise gehalten. Als nächster Schritt wird mittels Gießen eines für das Chipkartensubstrat 12 geeigneten Materials in die Substratform und durch Aushärten desselben der Chip fest in dem Chipkartensubstrat plaziert. Anschließend wird mittels einer Schablone eine elektrisch leitfähige Paste 22 auf das Chipkartensubstrat, in dem der Chip 14 fest untergebracht ist, aufgebracht. Die elektrisch leitfähige Paste 22 bildet, wie es in Fig. 1 zu sehen ist, sowohl die Spulenstruktur 18 als auch die beim Stand der Technik in einem extra Schritt durchzuführenden Verbindungen 24 mit den Anschlußflächen 14a, 14b in einem Arbeitsgang. Das Aufbringen der elektrisch leitfähigen Paste, welche vorzugsweise ein elektrisch leitfähiger Klebstoff sein kann, findet beispielsweise mittels des bekannten Siebdruckverfahrens statt. Die Schablone definiert die Spulenstruktur 18 sowie die beiden Enden der Spulenstruktur, welche die leitfähige Verbindungen 24 mit den Anschlußflächen 16a, 16b des Chips 14 herstellen. Nach der Aushärtung der leitfähigen Paste 22 wird eine Deckelschicht 26 analog zum Chipkartensubstrat 12 gegossen, wonach das Chipkartensubstrat 12 und die Deckelschicht 26 laminiert werden, um die kontaktlose Chipkarte gegen äußere unerwünschte Einflüsse zu schützen und die Spulenstruktur 18 fest zu halten.

Wie es aus Fig. 2D ersichtlich ist, ist es demnach durch das Laminieren der Deckelschicht 26 und des Chipkartensubstrats 12 nicht notwendig, den Mikrochip 14 oder die Spulenstruktur 12 extra zu befestigen, da dieselben durch sowohl die Verbindungen 24 als auch durch die Deckelschicht 26 fest und zuverlässig an ihrem richtigen Platz zueinander gehalten werden.

Durch Eingießen des Chips 14 in das Chipkartensubstrat 12 wird, wie es in den Fig. 2A bis 2D gezeigt ist, sichergestellt, daß der Chip im wesentlichen ohne Spalt zum Chipkartensubstrat hin angeordnet ist. Ferner wird auf einfach Weise erreicht, daß eine Hauptoberfläche des Chips, die die Anschlußflächen aufweist, im wesentlichen flächig bündig zu der Oberfläche des Chipkartensubstrats angeordnet ist, wodurch das Siebdruckverfahren zum Aufbringen der leitfähigen Paste verwendet werden kann, um in einem Schritt sowohl die Spulenstruktur als auch die Verbindung zwischen der Spulenstruktur und dem Chip auf zuverlässige Art und Weise herzustellen.

Falls trotzdem die Hauptoberflächen des Chips 14 und des Chipkartensubstrats 12 durch Herstellungsabweichungen nicht exakt flächig bündig sind, so existiert dahingehend eine gewisse Toleranz, da die Höhe der leitfähigen Paste 22 Ausrichtungsfehler in gewissem Rahmen ausgleichen kann, um die Verbindungen 24 mit den Anschlußflächen 16a, 16b des Chips 14 zuverlässig herzustellen.

Obwohl es in den Figuren 1 und 2A bis 2D derart gezeichnet ist, daß zwischen dem Chip 14 und dem Chipkartensubstrat 12 kein Spalt vorhanden ist, ist auch diese genaue Herstellungspräzison für das Gießen des Chipkartensubstratmaterials nicht unbedingt erforderlich, da es für die Funktion der kontaktlosen Chipkarte unwesentlich ist, wenn eine geringe Menge der leitfähigen Paste 22 in einen vorhandenen Spalt eindringt, solange die einzelnen Windungen der Spulenstruktur 18 nicht kurzgeschlossen sind und eventuellen Hochfrequenzeffekte aufgrund von parasitären Streukapazitäten der Spulenstruktur die Spulenantenne unwirksam machen.

## Patentansprüche

1. Verfahren zum Herstellen einer kontaktlosen Chipkarte (10), mit folgenden Schritten:
Halten eines Chips (14), der auf einer Oberfläche Anschlußflächen (16a, 16b) aufweist, in einer ein Chipkartensubstrat (12) definierenden Form, derart, daß die Oberfläche des Chips (14), die die Anschlußflächen aufweist, im wesentlichen in der gleichen Ebene liegt, in der eine durch die Form definierte Oberfläche des Chipkartensubstrats (12) liegt;
Einbringen eines Chipkartensubstratmaterials in die Form; und
Aufbringen einer Spulenstruktur (18) mittels Siebdruckens einer leitfähigen Paste auf das Chipkartensubstrat (12), derart, daß sich die Spulenstruktur (18) bis zu den Anschlußflächen (16a, 16b) auf dem Chip erstreckt.

2. Verfahren gemäß Anspruch 1,
bei dem nach dem Aufbringen der Spulenstruktur auf das Chipkartensubstrat (12) eine isolierende Deckelschicht (26) über dasselbe aufgebracht wird, derart, daß die Spulenstruktur (18) und der Chip (14) zwischen dem Chipkartensubstrat (12) und der Deckelschicht (26) angeordnet sind.

## Claims

1. A method of producing a contactless chip card (10), comprising the following steps:
holding a chip (14), which is provided with terminal pads (16a, 16b) on a surface thereof, in a mould defining a chip-card substrate (12), in such a way that the chip (14) surface provided with said terminal pads is located substantially in the same plane as a chip-card substrate (12) surface defined by the mould;
introducing a chip-card substrate material into the mould; and
applying a coil structure (18) by screen-printing a conductive paste onto the chip-card substrate (12) in such a way that the coil structure (18) extends up to the terminal pads (16a, 16b) on the chip.

2. The method according to claim 1,
wherein, after the application of the coil structure on the chip-card substrate (12), an insulating cover layer (26) is applied on top of said chip-card substrate in such a way that the coil structure (18) and the chip (14) are arranged between the chip-card substrate (12) and the cover layer (26).

## Revendications

1. Procédé de fabrication d'une carte à puce sans contact (10), aux étapes suivantes consistant à :
maintenir une puce (14) présentant, sur une surface, des faces de raccordement (16a, 16b) dans un moule définissant un substrat de carte à puce (12), de sorte que la surface de la puce (14) présentant les faces de raccordement se situe sensiblement dans le même plan que celui dans lequel se situe une surface, définie par le moule, du substrat de carte à puce (12);
introduire un matériau de substrat de carte à puce dans le moule ; et
appliquer une structure de bobine (18), par sérigraphie d'une pâte conductrice, sur le substrat de carte à puce (12), de sorte que la structure de bobine (18) s'étende jusqu'aux faces de raccordement (16a, 16b) sur la puce.

2. Procédé selon la revendication 1, dans lequel, après application de la structure de bobine sur le substrat de carte à puce (12), une couche de couvercle isolante (26) est appliquée sur celle-ci, de sorte que la structure de bobine (18) et la puce (14) soient disposées entre le substrat de carte à puce (12) et la couche de couvercle isolante (26).
